# EUROPEAN PATENT APPLICATION

(11) **EP 1 524 247 A1**
(43) Date of publication of application: **20.04.2005**
(21) Application number: 04024266.1
(22) Date of filing: 12.10.2004
(51) Int. Cl.: C03C 17/34

(54) **Infrared shielding film-coated glass and process for its production**

(30) Priority: 15.10.2003 JP 2003355104; 10.12.2003 JP 2003411248
(71) Applicant: Asahi Glass Company, Limited, Chiyoda-ku, Tokyo 100-8405 (JP)
(72) Inventor: Tomonaga, Hiroyuki, Kanagawa-ku Yokohama-shi Kanagawa (JP); Sunahara, Kazuo, Kanagawa-ku Yokohama-shi Kanagawa (JP)
(74) Representative: Müller-Boré & Partner Patentanwälte

(57) **Abstract**

An infrared shielding film-coated glass comprising a glass substrate and an infrared shielding film formed thereon, wherein the infrared shielding film comprises a first film layer formed in a thickness of from 0.2 to 2 µm on the surface of the glass substrate and having transparent electroconductive oxide fine particles having an average primary particle diameter of at most 100 nm dispersed in a silicon oxide matrix in a mass ratio of transparent electroconductive oxide fine particles/silicon oxide = 10/0.5 to 10/20, and a second film layer laminated in a thickness of from 0.02 to 0.2 µm on the first film layer and comprising silicon oxide, silicon oxynitride or silicon nitride, and the increase in haze by abrasion after a 1000 rotation test by a CS-10F abrasive wheel in accordance with the abrasion resistance test stipulated in JIS R3212 (1998) is at most 5%.

## Description

The present invention relates to an infrared shielding film-coated glass and a process for its production. Particularly, it relates to an infrared shielding film-coated glass excellent in the mechanical durability and a process for its production.

In recent years, an infrared shielding film-coated glass has been employed for the purpose of shielding infrared rays entering into a vehicle or building through a vehicle glass or building glass thereby to reduce the temperature rise in the vehicle or building or to reduce the air conditioning load (e.g. JP-A-10-279329). Further, glass for vehicles or glass for building is required to have a high visible light transmittance to secure safety or visibility, in many cases.

Heretofore, there have been many proposals to impart an infrared shielding property to a glass substrate thereby to increase a heat-shielding performance. For example, there has been a proposal to incorporate infrared absorptive ions in a glass substrate thereby to impart an infrared shielding property to the glass itself, or a proposal to form an electroconductive film on the surface of a glass substrate thereby to impart an infrared shielding property, and such a proposal has been practically employed.

However, by the method of incorporating infrared absorptive ions in a glass substrate, it has been difficult to increase the infrared absorptivity while maintaining the visible light transmittance at a high level, and particularly, it has been difficult to increase the shielding performance against intermediate wavelength infrared rays having a wavelength of from 1.5 µm to 2.7 µm. On the other hand, by the method of forming an electroconductive film on the surface of a glass substrate, radiowaves can not transmit through the glass due to the electroconductive film, which tends to bring about an inconvenience as radiowave transmittance through an opening has been required along with the progress in mobile telecommunication in recent years. Thus, it has been very difficult to produce a glass having transparency, infrared-shielding property and radiowave transmittance at the same time.

In order to solve the above-mentioned problems, a method has been proposed wherein a substrate is coated with a coating film having fine particles of tin oxide-doped indium oxide (ITO) capable of providing a high infrared shielding performance dispersed in a binder, thereby to provide an infrared shielding film-coated glass (JP-A-7-70482 and JP-A-8-41441). By this method, an infrared shielding property can be imparted while maintaining a relatively high visible light transmittance, and at the same time, the electrical conductivity as the film will be suppressed by the presence of the binder, whereby it will be possible to impart radiowave transmittance. However, the binder to be usually used in this system was an organic binder or an inorganic binder, and the organic binder had a problem that the mechanical durability of the coating film thereby obtainable was poor. On the other hand, as the inorganic binder, a material obtained by a sol/gel method was frequently employed, and even then, in order to produce a coating film excellent in durability so that it was capable of being used at a site where the above-mentioned mechanical durability was required, it was necessary to carry out heat treatment at a temperature of e.g. at least 400°C, preferably at least 500°C. However, the ITO electric conductor is semiconductor of oxygen-deficient type, and if it is held at a temperature of at least 300°C in the presence of oxygen, free electrons will be lost by oxidation, whereby the infrared shielding property will be lost. Accordingly, in order to produce a coating film excellent in mechanical durability while maintaining the infrared shielding property, it is required to carry out heat treatment in a non-oxidizing atmosphere which is totally disadvantageous from the viewpoint of the costs, and a method has not yet been found whereby a highly durable infrared shielding film-coated glass can be produced simply and inexpensively by heat treatment in atmospheric air. Thus, an infrared shielding film has not been found which can be applied to a site where high mechanical durability is required, such as a window glass for an automobile.

It is an object of the present invention to provide an infrared shielding film-coated glass which has a high visible light transmittance, a low infrared transmittance and a high radiowave transmittance and which is capable of being applied to a site where mechanical durability is required, such as a window glass for an automobile.

Namely, the present invention provides the following (1) to (11).
(1) An infrared shielding film-coated glass comprising a glass substrate and an infrared shielding film formed thereon, wherein the infrared shielding film comprises a first film layer formed in a thickness of from 0.2 to 2 µm on the surface of the glass substrate and having transparent electroconductive oxide fine particles having an average primary particle diameter of at most 100 nm dispersed in a silicon oxide matrix in a mass ratio of transparent electroconductive oxide fine particles/silicon oxide = 10/0.5 to 10/20, and a second film layer laminated in a thickness of from 0.02 to 0.2 µm on the first film layer and comprising silicon oxide, silicon oxynitride or silicon nitride, and the increase in haze by abrasion after a 1000 rotation test by a CS-10F abrasive wheel in accordance with the abrasion resistance test stipulated in JIS R3212 (1998) is at most 5%.
(2) The infrared shielding film-coated glass according to the above 1, wherein the infrared shielding film has a visible light transmittance of at least 90%.
(3) The infrared shielding film-coated glass according to the above 1 or 2, wherein the transparent electroconductive oxide fine particles are fine particles which show a peak wavelength in reflectance of at most 550 nm in a diffuse reflection spectrophotometry of the fine particles.
(4) The infrared shielding film-coated glass according to any one of the above 1 to 3, wherein the glass substrate is a glass substrate having a visible light transmittance of at least 70% as prescribed in JIS R3106 (1998), a transmittance at a wavelength of 1.0 µm of at most 30%, and a transmittance at a wavelength of 2.0 µm of from 40 to 70%.
(5) A process for producing the infrared shielding film-coated glass as defined in the above 1, which comprises:
   a step of coating a composition comprising transparent electroconductive oxide fine particles having an average primary particle diameter of at most 100 nm, on the surface of a glass substrate to form a lower film layer having the transparent electroconductive oxide fine particles deposited,
   a step of semi-curing the lower film layer at a temperature of at most 200°C,
   a step of coating a composition comprising a polysilazane compound on the lower film layer to form an upper film layer thereby to form a laminated film, and
   a step of heat-treating the obtained laminated film-coated glass substrate in an atmosphere containing oxygen at a glass substrate temperature of from 400°C to 750°C.
(6) The process for producing the infrared shielding film-coated glass according to the above 5, wherein the composition comprising the transparent electroconductive oxide fine particles, contains a component which becomes a silicon oxide matrix having a siloxane bond, when heated.
(7) The process for producing the infrared shielding film-coated glass according to the above 5 or 6, wherein as the component which becomes the silicon oxide matrix, at least one member selected from the group consisting of a mixture of alkoxysilanes represented by the average compositional formula (CH₃)ₘSi(OR)₄₋ₘ (R is a methyl group or an ethyl group, and m is from 0.2 to 0.95), a hydrolysate of the mixture and a polycondensate of the mixture, is used.
(8) The process for producing the infrared shielding film-coated glass according to the above 5 to 7, wherein as the transparent electroconductive oxide fine particles, fine particles which show a peak wavelength in reflectance of at most 550 nm in a diffuse reflection spectrophotometry of the fine particles, are used.
(9) The process for producing the infrared shielding film-coated glass according to the above 5 to 7, wherein as the transparent electroconductive oxide fine particles, ITO fine particles are used, of which the powder color in the xy chromaticity coordinates obtained by a 2-degree visual field with illuminant C in accordance with JIS Z8701 (1999), is such that value x is at least 0.3 and value y is at least 0.33.
(10) The process for producing the infrared shielding film-coated glass according to the above 9, wherein as the ITO fine particles, ITO fine particles are used, of which the crystallite size obtained by the powder X-ray diffraction analysis is at least 15 nm and at most 50 nm.
(11) The process for producing the infrared shielding film-coated glass according to the above 5 to 9, wherein in the step of semi-curing the lower film layer, ultraviolet rays having a wavelength of at most 300 nm are irradiated for at least one minute to semi-cure the film layer.

The infrared shielding film-coated glass of the present invention has a high visible light transmittance, a low infrared transmittance, a high radiowave transmittance and a high mechanical durability. Further, the infrared shielding film-coated glass of the present invention has a high chemical resistance. According to the process of the present invention, the infrared shielding film-coated glass of the present invention can be obtained while carrying out tempering treatment in an atmosphere containing oxygen or high temperature molding processing in an atmosphere containing oxygen, whereby simplification of the process and reduction of the production costs can be attained.

The present invention provides an infrared shielding film-coated glass comprising a glass substrate and an infrared shielding film formed thereon, wherein the infrared shielding film comprises a first film layer formed in a thickness of from 0.2 to 2 µm on the surface of the glass substrate and having transparent electroconductive oxide fine particles having an average primary particle diameter of at most 100 nm dispersed in a silicon oxide matrix in a mass ratio of transparent electroconductive oxide fine particles/silicon oxide=10/0.5 to 10/20, and a second film layer laminated in a thickness of from 0.02 to 0.2 µm on the first film layer and comprising silicon oxide, silicon oxynitride or silicon nitride, and the increase in haze by abrasion after a 1000 rotation test by a CS-10F abrasive wheel in accordance with the abrasion resistance test stipulated in JIS R3212 (1998) is at most 5%. Further, the present invention provides a process for producing such an infrared shielding film-coated glass efficiently and inexpensively.

In the accompanying drawings:
Fig. 1 is a graph showing a diffuse reflection spectrum of ITO fine particles used in the present invention.
Fig. 2 is a graph showing the spectral transmittances in one embodiment of the present invention and Comparative Example.
Fig. 3 is a cross-sectional view of a heat shielding film-coated glass according to one embodiment of the present invention.

Now, the constituting elements of the present invention will be described in detail.

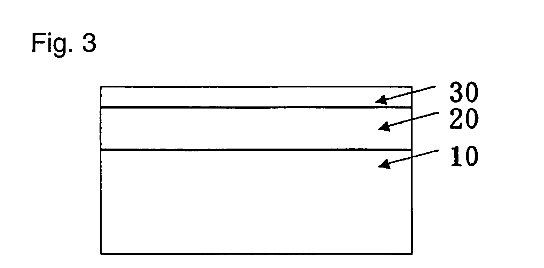

Firstly, the first film layer (20 in Fig. 3) will be described.

The transparent electroconductive oxide fine particles having an average primary particle diameter of at most 100 nm, are a constituting element to provide the infrared shielding property, and it is important that the average primary particle diameter is at most 100 nm. If the particle diameter is larger than this level, such tends to cause a haze due to scattering when formed into a film on a glass substrate, such being undesirable. It is more preferably at most 50 nm with a view to maintaining the transparency.

The transparent electroconductive oxide fine particles to provide the infrared shielding property, are preferably at least one type of fine particles selected from the group consisting of indium oxide, tin oxide and zinc oxide. From the viewpoint of the infrared shielding property, fine particles made of a material (hereinafter referred to as ITO) having tin oxide mixed to indium oxide, are preferred. The mixing ratio of tin oxide to indium oxide of ITO is required to be Sn/In=2 to 20, particularly preferably Sn/In=3 to 10, when represented by the ratio of the atomicity of tin to the atomicity of indium (Sn/In).

The silicon oxide matrix serves as a binder for the above transparent electroconductive oxide fine particles and serves to increase the adhesion to the substrate or the film hardness. The transparent electroconductive oxide fine particles themselves are excellent in electrical conductivity, and accordingly, if the transparent electroconductive oxide fine particles are continuously in close contact with one another in the coating film, the coating film itself will show electrical conductivity and thus will adversely affect the radiowave transmittance. The silicon oxide matrix is effective to limit the contact of the transparent electroconductive oxide fine particles and thereby to prevent the coating film itself from becoming an electroconductive film, and thus, it is an important constituting element to provide the radiowave transmittance of the coating film. Here, silicon oxide is not required to be SiO₂ in a strict sense, and it may be a silicon oxide matrix material comprising Si-O-Si siloxane bonds. Further, as the silicon oxide matrix material, a small amount of an additional constituting element other than Si may be contained, such as N, C, Ti, Sn, Zr, Al, B, P, Nb or Ta.

The silicon oxide matrix material is required in the first film layer in a mass ratio of "transparent electroconductive oxide fine particles"/"silicon oxide"=10/0.5 to 10/20. If the silicon oxide is less than 10/0.5 in the above mass ratio, the adhesion or hardness of the film layer tends to be inadequate, and it tends to be difficult to maintain the radiowave transmittance. If it exceeds 10/20 in the above mass ratio, it tends to be difficult to maintain the required infrared shielding property. Preferably, the mass ratio of "transparent electroconductive oxide fine particles"/"silicon oxide"=10/0.5 to 10/10.

The thickness of the first film layer is from 0.2 to 2 µm. If the thickness is less than 0.2 µm, it tends to be difficult to maintain a good infrared shielding property, and if it exceeds 2 µm, cracking is likely to result during the formation of the film layer, or the transparency tends to deteriorate.

Now, the second film layer (30 in Fig. 3) will be described. The second film layer is a constituting element which contributes to improvement of the mechanical durability of the coating film, and it serves as an oxygen barrier layer to prevent oxidation of the transparent electroconductive oxide fine particles, when the coating film is heat-treated at a high temperature, as described hereinafter. The second film layer is a film layer comprising silicon oxide, silicon oxynitride or silicon nitride. Particularly preferred is silicon oxide or oxynitride. The thickness of the second film layer is required to be from 0.02 to 0.2 µm. If the thickness is less than 0.02 µm, it tends to be difficult to maintain high durability, and the oxygen barrier property also tends to be inadequate. If the film thickness exceeds 0.2 µm, cracking is likely to form in the layer.

In the present invention, the first film layer and the second film layer are formed in this order to provide an infrared shielding film-coated glass, of which the increase in haze by abrasion after a 1000 rotation test by a CS-10F abrasive wheel in accordance with the abrasion resistance test stipulated in JIS R3212 (1998), section 3.7, is at most 5%. According to the present invention, such a glass is applicable to a site where a very high mechanical durability is required, such as a door glass for an automobile, and it satisfies both the infrared shielding property and the radiowave transmittance.

Further, when it is used as a window glass for an automobile, a high visible light transmittance may be required depending upon the site. In such a case, the visible light transmittance of the infrared shielding film (exclusive of the glass substrate) is preferably at least 90%. Here, the visible light transmittance means the visible light transmittance of the film itself as calculated from the calculation formula stipulated in JIS R3212. When an infrared shielding film having such a visible light transmittance of at least 90%, is formed on a glass substrate, the visible light transmittance will not substantially decrease. Namely, when the visible light transmittance of the glass substrate itself is 100%, the visible light transmittance of the film-coated glass substrate can be maintained at a level of at least 90%.

Further, the glass substrate (10 in Fig. 3) to be used in the present invention, is not particularly limited, and common soda lime glass, borosilicate glass or quartz glass may, for example, be employed. It is particularly effective to employ a glass substrate having an infrared shielding property. Specifically, it is particularly effective to employ a glass substrate, of which the visible light transmittance prescribed in JIS R3106 (1998) is at least 70%, the transmittance at a wavelength of 1.0 µm is at most 30%, and the transmittance at a wavelength of 2.0 µm is from 40 to 70%. With the infrared shielding film in the present invention, the shielding property in a near infrared region in the vicinity of 1.0 µm is not so high, and by using a glass substrate having a high shielding performance against light having a wavelength in the vicinity of 1.0 µm, it is possible to provide an excellent infrared shielding property over the entire infrared region.

The infrared shielding film-coated glass of the present invention can be produced as follows. Namely,
1) a composition comprising transparent electroconductive oxide fine particles having an average primary particle diameter of at most 100 nm, is coated on the surface of a glass substrate to form a lower film layer having the transparent electroconductive oxide fine particles deposited,
2) the lower film layer is semi-cured at a temperature of at most 200°C,
3) a composition comprising a polysilazane compound is coated on the lower film layer to form an upper film layer thereby to form a laminated film, and
4) the obtained laminated film-coated glass substrate is heat-treated at a glass substrate temperature of from 400°C to 750°C in an atmosphere containing oxygen.

The agglomerated state of the transparent electroconductive oxide fine particles in the coating film after firing, reflects the agglomerated state in the composition. Accordingly, in order to maintain the transparency or radiowave transmittance in the coating film, the transparent electroconductive oxide fine particles are required to be highly dispersed in the composition. As such a dispersed state, the number average agglomerated particle diameter is preferably at most 500 nm, more preferably at most 200 nm, further preferably at most 100 nm. As the dispersant, various solvents may suitably be used, such as a polar solvent such as water or an alcohol, or a non-polar solvent such as toluene or xylene. As the method for dispersion, a known method may be employed. For example, ultrasonic wave irradiation, a homogenizer, a media mill such as a ball mill, a beads mill, a sand mill or a paint shaker, or a high pressure impact mill such as a jet mill or a nanomizer, may be employed.

To the dispersion having the transparent electroconductive oxide fine particles dispersed in a solvent as mentioned above, a component (hereinafter referred to as a siloxane matrix material) which is capable of becoming a silicon oxide matrix having siloxane bonds by heating, may be added. The siloxane matrix material is a compound whereby siloxane bonds (Si-O-Si) will be formed by heating to form a three dimensional network and which is thus capable of becoming a hard transparent silicon oxide matrix. Specifically, an alkoxysilane to be used in a sol/gel method, or a hydrolysate of an alkoxysilane, a condensate of an alkoxysilane or water glass, may, for example, be mentioned. Among them, an alkoxysilane is preferably employed. As such an alkoxysilane, an alkoxysilane represented by the formula (CH₃)ₐSi(OR)₄₋ₐ (R is a methyl group or an ethyl group, and a is an integer) may be mentioned, and specifically, it may, for example, be tetramethoxysilane, tetraethoxysilane, methyltrimethoxysilane, methyltriethoxysilane, dimethyldimethoxysilane or dimethyldiethoxysilane. Particularly preferred is at least one member selected from the group consisting of a mixture of such alkoxysilanes, a hydrolysate of such a mixture, and a polycondensate of such a mixture.

In order for the first film layer to have an effective infrared shielding property, it is required to have a certain thickness. Accordingly, when the balance of the thickness and the hardness of the coating film is taken into consideration, it is further preferred that said at least one member selected from the group consisting of the above mixture, the above hydrolysate and the above polycondensate, is one represented by an average compositional formula of (CH₃)ₘSi(OR)₄₋ₘ (m=0.2 to 0.95). Here, m represents the abundance ratio of the CH₃ group adjacent to the Si atom to the Si atom, and if m is less than 0.2, cracking is likely to result in the film layer when the film layer is thickened. If it exceeds 0.95, not only it tends to be difficult to form a film layer having a sufficient hardness, but also it tends to be difficult to withdraw the CH₃ groups during the heat treatment which will be described hereinafter, whereby the film layer is likely to be colored. Further, other element or its compound may be incorporated, which may be a glass forming or modifying component, such as Ti, Sn, Zr, Al, B, P, Nb or Ta.

The abundance ratio of the transparent electroconductive oxide fine particles to the siloxane matrix material in this composition is "transparent electroconductive oxide fine particles"/"silicon oxide"=10/0.5 to 10/20 by mass ratio calculated as oxides. It is preferably at least 1/1. If the mass ratio of the transparent electroconductive oxide fine particles to the siloxane matrix material is less than 10/20, the ultraviolet shielding property tends to be deficient.

The coating composition thus obtained, is coated on a glass substrate to form a film layer thereby to obtain a lower film layer. The coating method is not particularly limited, and a known method such as a dip coating method, a spin coating method, a spray coating method, a flexographic printing method, a screen printing method, a gravure printing method, a roll coating method or a meniscus coating method, may, for example, be used.

The thickness of the first film layer thus obtained is required to be from 0.2 to 2 µm as the film thickness after the lower film layer is subjected to the heat treatment which will be described hereinafter. If it is less than 0.2 µm, the desired infrared shielding property tends to be hardly obtainable, and if it exceeds 2 µm, cracking is likely to result in the film layer, and there will be no further improvement in the infrared shielding property, thus such being uneconomical.

The lower film layer coated on the glass substrate is then semi-cured at a temperature of at most 200°C. In this step, it is the main purpose to remove the solvent component, etc. in the layer, and if the temperature is raised higher than this, oxidation of the transparent electroconductive oxide fine particles is likely to proceed, such being undesirable. The treating time is from about 1 minute to 2 hours. Further, the lower limit of the practical temperature is different between a case where a siloxane matrix material is contained in the lower film layer composition and a case where such a matrix material is not contained. In a case where a siloxane matrix material is contained in the lower film layer composition, the lower limit of the practical temperature is about 50°C. Even at a temperature of lower than 50°C, semi-curing may proceed, but it takes time, thus such being not practical. The temperature for semi-curing is from 50°C to 200°C, preferably from 100°C to 200°C, more preferably from 120°C to 200°C.

In a case where no siloxane matrix material is contained in the lower film layer composition, the lower limit of the practical temperature is about room temperature. In either case, the atmosphere for the semi-curing may be atmospheric air, or it may be drying in a non-oxidizing atmosphere. However, there is no particular advantage in the non-oxidizing atmosphere, thus such being uneconomical.

Further, before or after this heat treatment, during the heat treatment or instead of the heat treatment, ultraviolet rays having a wavelength of at most 300 nm may be irradiated for at least one minute. Such irradiation of ultraviolet rays may be a simple treatment such that the film layer-coated glass is left to stand below a lamp irradiating ultraviolet rays having a short wave of at most 300 nm, and as such a lamp, a mercury lamp is preferably employed. It is particularly effective to employ a lamp so-called a low pressure mercury lamp, which emits a large quantity of ultraviolet rays having a wavelength of at most 300 nm. The ultraviolet rays having a wavelength of at most 300 nm will contribute to the decomposition of organic substances in the layer and will serve to facilitate withdrawal of organic components from the layer during the heat treatment which will be described hereinafter.

On the lower film layer in a semi-cured state thus obtained, a composition comprising a polysilazane compound is coated to form an upper film layer. The upper film layer has a function as an oxygen barrier layer to prevent the transparent electroconductive oxide fine particles from being oxidized by oxygen supplied to the transparent electroconductive oxide fine particles in the lower film layer during the heat treatment which will be described hereinafter. The polysilazane is a general name for a resin compound having a Si-NR-Si (R is hydrogen or a hydrocarbon group) silazane bond and is a material wherein the Si-NH bond will be decomposed by heating or by a reaction with moisture to form a Si-O-Si network.

In the present invention, a perhydropolysilazane of the above formula wherein R=H, is preferably employed, since it forms a hard film layer. The second film layer formed from this polysilazane has a relatively high oxygen barrier property and is very useful as a material for an oxygen barrier layer to be used in this step. In the composition for forming the second film layer, a curing catalyst, a solvent and an activating agent may be added. The amount of the polysilazane compound in the composition for forming the second film layer, is preferably at most 20% by mass ratio. Further, a small amount of impurities which are not required for forming the film layer, such as other metal sources, may be contained.

It is very important that the thickness of the second film layer is from 0.02 to 0.2 µm as the thickness after the upper film layer is heat-treated. The optimum layer thickness may vary depending upon the components in the lower film layer. However, if the layer thickness is less than 0.02 µm, the oxygen barrier property tends to be inadequate, and ITO in the lower film layer is likely to be oxidized during the heat treatment, whereby it tends to be difficult to maintain the infrared shielding property. If the layer thickness is increased beyond 0.2 µm, the decomposed components generated from the lower film layer during the heat treatment, such as organic components, etc. generated from the alkoxysilane compound, tend to be hardly withdrawn, whereby the film layer tends to be colored, or cracking is likely to result.

As the coating method for the upper film layer, a known technique may be employed in the same manner as the method for forming the lower film layer.

After forming a laminated film as described above, heat treatment is carried out at a temperature of at least 400°C to cure the coating film. The time for the heat treatment is usually from about 1 minute to 2 hours. With respect to the atmosphere, this heat treatment can be carried out usually in an atmosphere containing oxygen, such as in atmospheric air, such being economical. The heat treatment may be carried out in a non-oxidizing atmosphere, but particularly when a large size window glass or the like is to be prepared, such requires a substantial cost for the maintenance of the atmosphere and thus is not preferred. The upper limit of the temperature is determined by the heat resistance of the glass substrate. In a case where a usual soda lime glass substrate is employed, the upper limit will be about 750°C. Particularly when a tempered glass to be used as a window glass for an automobile is to be prepared, tempering treatment may be carried out by raising the temperature to a level close to from 650 to 700°C in atmospheric air, followed by cooling in air. When the infrared shielding film of the present invention is employed, no deterioration of the infrared shielding property will be observed even when heat treatment is carried out for the tempering treatment. Accordingly, heat treatment is possible by utilizing the heat of high temperature in this tempering step, whereby tempered glass for an automobile or for building, provided with an infrared shielding film having high durability can be efficiently and economically produced. The temperature for the heat treatment is preferably from 400°C to 750°C, particularly preferably from 500°C to 700°C, as the temperature of the glass substrate.

Further, in a case where ITO is used as the infrared shielding fine particles, the following method may be mentioned as a more preferred mode of the production process. Namely,
1) a composition comprising ITO fine particles having an average primary particle diameter of at most 100 nm, of which the powder color in the xy chromaticity coordinates is such that value x is at least 0.3 and value y is at least 0.33, and a component which becomes a silicon oxide matrix having siloxane bonds by heating, is coated on at least one surface of a glass substrate, to form a lower film layer having the ITO fine particles dispersed in the silicon oxide matrix in a mass ratio of "ITO fine particles"/"silicon oxide"=10/0.5 to 10/20,
2) the lower film layer is semi-cured at a temperature of at least 50°C and at most 200°C,
3) a composition comprising a polysilazane compound is coated on the above lower film layer, to form an upper film layer thereby to form a laminated film, and
4) the obtained laminated film-coated glass substrate is heat-treated at a glass substrate temperature of from 400°C to 750°C in an atmosphere containing oxygen.

Otherwise, in a case where no siloxane matrix material is incorporated in the composition for the lower film layer,
1) a lower film layer comprising ITO fine particles having an average primary particle diameter of at most 100 nm, of which the powder color in the xy chromaticity coordinates is such that value x is at least 0.3 and value y is at least 0.33, is coated on at least one surface of a glass substrate,
2) the lower film layer is semi-cured at a temperature of at most 200°C, preferably at room temperature,
3) a composition comprising a polysilazane compound is coated on the above lower film layer, to form an upper film layer thereby to form a laminated film, and
4) the obtained laminated film-coated glass substrate is heat-treated at a glass substrate temperature of from 400°C to 750°C in an atmosphere containing oxygen.

The ITO fine particles to be used here are such that the powder color in the xy chromaticity coordinates has a value x of at least 0.3 and a value y of at least 0.33. Such ITO fine particles themselves do not have an infrared shielding property. However, in the subsequent firing step, reduction takes place in the layer to generate a carrier thereby to form a layer having an infrared shielding property.

Such ITO fine particles can be prepared simply by firing a precursor powder obtained by e.g. a coprecipitation method, in atmospheric air or in a usual inert gas such as nitrogen. Such ITO fine particles do not require firing in a reducing atmosphere such as hydrogen or in a pressurized inert atmosphere, involving a danger, like conventional ITO fine particles having a high performance infrared shielding property, and thus can be prepared safely at a lower cost.

Such ITO fine particles are required to have an average primary particle diameter of at most 100 nm from the viewpoint of the transparency. It is particularly preferred to employ ITO fine particles, of which the crystallite size as calculated from the powder X-ray diffraction analysis, is from 15 to 50 nm. If the crystallite size is smaller than this, it tends to be difficult to provide a high infrared shielding property even after reduction takes place in the layer, and with the fine particles having a crystallite size larger than this, the transparency is likely to deteriorate.

The agglomerated state of ITO fine particles in the coating film after firing, reflects the agglomerated state in the composition. In order for the coating film to maintain transparency or radiowave transmittance, the ITO fine particles are required to be highly dispersed in the composition. As such a dispersed state, the number average agglomerated particle diameter is preferably at most 500 nm, more preferably at most 200 nm, further preferably at most 100 nm. As the dispersant, various solvents may suitably be used, such as a polar solvent such as water or an alcohol, or a non-polar solvent such as toluene or xylene. As the method for dispersion, a known method may be employed. For example, ultrasonic wave irradiation, a homogenizer, a media mill such as a ball mill, a beads mill, a sand mill or a paint shaker, or a high pressure impact mill such as a jet mill or a nanomizer, may be used.

To the dispersion having ITO fine particles dispersed in a solvent as described above, a component (hereinafter referred to as a siloxane matrix material) which is capable of becoming a silicon oxide matrix having siloxane bonds by heating, may be added to obtain a coating composition. The siloxane matrix material is a compound wherein siloxane bonds (Si-O-Si) will be formed by heating to form a three dimensional network and which thus is capable of becoming a hard transparent silicon oxide matrix. Specifically, an alkoxysilane to be used in a sol/gel method, a hydrolysate of an alkoxysilane, a condensate of an alkoxysilane or water glass may, for example, be mentioned. It is particularly preferred to use an alkoxysilane. As such an alkoxysilane, an alkoxysilane represented by the formula (CH₃)ₐSi(OR)₄₋ₐ (R is a methyl group or an ethyl group, and a is an integer) may be mentioned, and specifically, it may, for example, be tetramethoxysilane, tetraethoxysilane, methyltrimethoxysilane, methyltriethoxysilane, dimethyldimethoxysilane or dimethyldiethoxysilane. Particularly preferred is at least one member selected from the group consisting of a mixture of such alkoxysilanes, a hydrolysate of such a mixture and a polycondensate of such a mixture.

In order for the first film layer to have an effective infrared shielding property, it is required to have a certain thickness. Accordingly, if the balance of the thickness and the hardness of the film layer is taken into consideration, it is further preferred that said at least one member selected from the group consisting of the above mixture, the above hydrolysate and the above polycondensate, is one represented by an average compositional formula of (CH₃)ₘSi(OR)₄₋ₘ (m=0.2 to 0.95). Here, m represents the abundance ratio of the CH₃ group adjacent to the Si atom to the Si atom. If m is less than 0.2, cracking is likely to result in the layer when the layer is thickened, and if it exceeds 0.95, not only it tends to be difficult to obtain a layer having sufficient hardness, but also it tends to be difficult to withdraw the CH₃ groups during the heat treatment which will be described hereinafter, whereby the layer is likely to be colored. Further, other element or its compound may be incorporated, which will be a glass-forming or modifying component, such as Ti, Sn, Zr, Al, B, P, Nb or Ta. Further, in a case where a siloxane matrix material is not added to the composition, it is likely that the prior to firing, the upper film layer composition liquid containing the polysilazane compound, which will be described hereinafter, will penetrate into the lower film layer, and after the firing, a component comprising silicon oxide will penetrate into the lower film layer.

The abundance ratio of the ITO fine particles to the siloxane matrix material in this composition, is "ITO fine particles"/"silicon oxide"=10/0.5 to 10/20 by mass ratio calculated as oxides. Preferred is from 10/0.5 to 10/10. If the mass ratio of the ITO fine particles to the siloxane matrix material is less than 10/20, the infrared shielding property tends to be deficient, and if the mass ratio of the ITO fine particles to the siloxane matrix material exceeds 10/0.5, it tends to be difficult to maintain the transparency of the layer. Further, here, the abundance ratio in the composition in the case where the siloxane matrix material is added to the composition, is described. However, the abundance ratio in the coating film after the firing is the same as the abundance ratio in the composition in a case where the siloxane matrix material is added to the composition.

The coating composition obtained as described above, is coated on a glass substrate to form a film layer thereby to obtain a lower film layer. The coating method is not particularly limited, and a known method such as a dip coating method, a spin coating method, a spray coating method, a flexographic printing method, a screen printing method, a gravure printing method, a roll coating method or a meniscus coating method, may, for example, be employed.

The thickness of the first film layer thus obtained is required to be from 0.2 to 2 µm as the film thickness after the lower film layer is subjected to the heat treatment which will be described hereinafter. If it is less than 0.2 µm, the desired infrared shielding property tends to be hardly obtainable, and if it exceeds 2 µm, cracking is likely to result in the film layer, and there will be no further improvement in the infrared shielding property, thus such being uneconomical.

In a case where a siloxane matrix material is incorporated in a lower film layer composition, the lower film layer coated on the glass substrate is semi-cured at a temperature of at most 200°C. In this step, it is the main purpose to remove the solvent component, etc. in the layer, and if the temperature is raised higher than this, oxidation of ITO fine particles tends to proceed, such being undesirable. The treating time is from about 1 minute to 2 hours. Further, the lower limit of the practical temperature is 50°C. Even at a temperature of lower than 50°C, semi-curing may proceed, but it takes time, thus such being not practical. The temperature for semi-curing is from 50°C to 200°C, preferably from 100°C to 200°C, more preferably from 120°C to 200°C. In a case where no siloxane matrix material is contained in the lower film layer composition, the lower limit of the practical temperature is about room temperature. Further, the atmosphere at that time may be atmospheric air, or it may be drying in a non-oxidizing atmosphere. However, there is no particular advantage in the non-oxidizing atmosphere, thus such being uneconomical.

Further, before or after this heat treatment, or during the heat treatment, ultraviolet rays having a wavelength of at most 300 nm may be irradiated for at least 1 minute. Such irradiation of ultraviolet rays may be a simple treatment such that the film layer-coated glass is left to stand below a lamp irradiating ultraviolet rays having a short wavelength of at most 300 nm, and as such a lamp, a mercury lamp is preferably employed. It is particularly effective to employ a lamp so-called a low pressure mercury lamp, which emits a large quantity of ultraviolet rays having a wavelength of at most 300 nm. The ultraviolet rays having a wavelength of at most 300 nm will contribute to the decomposition of organic substances in the layer and will serve to facilitate withdrawal of organic components from the layer during the heat treatment which will be described hereinafter.

On the lower film layer in a semi-cured state thus obtained, a composition comprising a polysilazane compound is coated to form an upper film layer. The upper film layer has a function as an oxygen barrier layer to prevent oxidation of ITO fine particles by oxygen supplied to the ITO fine particles in the lower layer during the heat treatment which will be described hereinafter. The polysilazane is a general name for a resin compound having a Si-NR-Si (R is hydrogen or a hydrogen carbon group) silazane bond and is a material wherein the Si-NH bond will be decomposed by heating or by a reaction with moisture to form a Si-O-Si network.

In the present invention, a perhydropolysilazane of the above formula wherein R=H, is preferably employed, since it forms a hard film layer. The second film layer formed of this polysilazane has a relatively high oxygen barrier property and is very useful as the material for an oxygen barrier layer to be used in this step. In the composition for forming the second film layer, a curing catalyst, a solvent and an activating agent may be added. The amount of the polysilazane compound in the composition for forming the second film layer, is preferably at most 20% by mass ratio based on the entire composition. Further, a small amount of impurities which are not required for forming the film layer, such as other metal sources, may be contained.

It is very important that the thickness of the second film layer is from 0.02 to 0.2 µm as the thickness after the upper film layer is heat-treated. The optimum thickness may vary depending upon the components in the lower film layer. However, if the thickness is less than 0.02 µm, the oxygen barrier property tends to be inadequate, and ITO in the lower film layer is likely to be oxidized during the heat treatment, whereby the infrared shielding property may not be maintained. On the other hand, if the thickness exceeds 0.2 µm, the decomposed components generated from the lower film layer during the heat treatment, such as organic components, etc. generated from the alkoxysilane compound, tend to be hardly withdrawn, whereby the film layer tends to be colored, or cracking is likely to result.

As the coating method for the upper film layer, a known technique may be used in the same manner as the method for forming the lower film layer.

After forming a laminated film as described above, heat treatment is carried out at a temperature of at least 400°C to cure the coating film. The time for the heat treating is usually from about 1 minute to 2 hours. By this heat treatment, the ITO fine particles in the lower film layer will be reduced, whereby an infrared shielding property will be obtained. The mechanism of this reduction action is not clearly understood, but it is considered that decomposition of organic components present in the layer, for example, organic groups of the organic silane compound, brings about the reduction reaction. Accordingly, with respect to the atmosphere, the heat treatment may be carried out in an atmosphere containing oxygen such as in usual atmospheric air, such being economical. The heat treatment may be carried out in a non-oxidizing atmosphere, but particularly when a large size window glass or the like is to be prepared, such requires a substantial cost for the maintenance of the atmosphere and thus is not preferred. The upper limit of the temperature is determined depending upon the heat resistance of the glass substrate. In a case where a usual soda lime glass substrate is employed, the upper limit will be about 750°C. Particularly when tempered glass to be used as a window glass for an automobile, is to be prepared, the temperature is usually raised to a level close to from 650 to 700°C in atmospheric air, followed by cooling in air to carry out tempering treatment. According to the process for producing an infrared shielding film of the present invention, the infrared shielding property can be obtained by heat treatment for tempering treatment, and such can be incorporated in a usual process for producing glass. Accordingly, a tempered glass for an automobile or for building, provided with an infrared shielding film having high durability, can be efficiently and economically produced.

Now, the present invention will be described in further detail with reference to Examples. However, it should be understood that the present invention is by no means restricted to such specific Examples. Further, the average particle diameter of the electroconductive oxide fine particles in the formed infrared shielding film was determined by the TEM observation, and the obtained infrared shielding film-coated glass was evaluated as follows.
1) Film thickness: The cross-section of the film was observed by a scanning electron microscope (S-800, manufactured by Hitachi, Ltd.), and from the obtained observation image, the thicknesses of the first and second film layers were obtained.
2) Visible light transmittance (Tᵥ): The transmittance of the infrared shielding film-coated glass of from 380 to 780 nm was measured by a spectrophotometer (U-3500, manufactured by Hitachi, Ltd.), and the visible light transmittance was calculated in accordance with JIS R3106 (1998).
3) Transmittance of the infrared shielding film itself: The transmittances of the glass substrate itself and the infrared shielding film-coated glass, measured by the method in 2), were compared, and it was evaluated by "transmittance of the infrared shielding film-coated glass"/"transmittance of the glass substrate itself" × 100%.
4) Solar energy transmittance (Te): The transmittance of the infrared shielding film-coated glass of from 300 to 2100 nm was measured by a spectrophotometer (U-3500, manufactured by Hitachi, Ltd.), and the solar energy transmittance was calculated in accordance with JIS R3106 (1998). Further, the infrared shielding performance in the present invention was represented by the performance of the solar energy transmittance.
5) Transmittance of the infrared region: The transmittance of the infrared shielding film-coated glass of from 300 to 2100 nm was measured by a spectrophotometer (U-3500, manufactured by Hitachi, Ltd.), and the transmittance of a wavelength of 1 µm was represented by T1, and the transmittance of the wavelength of 2 µm was represented by T2.
6) Abrasion resistance: Using a Taber type abrasion resistance tester, a 1000 rotation abrasion test was carried out by a CS-10F abrasion wheel in accordance with the method disclosed in JIS R3212 (1998), and the degree of scratches before and after the test was measured by the haze (haze value), and the abrasion resistance was evaluated by the increase in haze.
7) Chemical resistance: A sulfuric acid solution of 0.05 mol/liter and a sodium hydroxide solution of 0.1 mol/liter were dropped on the coated film and left to stand at 25°C for 24 hours, whereupon they were washed with water, and the changes in the appearance and properties as between before and after the test were monitored.
8) Radiowave attenuation: The attenuation of electromagnetic waves of 1 GHz passing through the infrared shielding film-coated glass was measured by a network analyzer (8510B, manufactured by Hewlett Packard).
9) Agglomerated particle diameter: The number average agglomerated particle diameter of the transparent electroconductive oxide fine particles in a solvent was measured by laser zeta potentiometer ELS-8000, manufactured by Otsuka Electronics Co., Ltd.)

### Preparation Example for Dispersion of Transparent Electroconductive Oxide Fine Particles

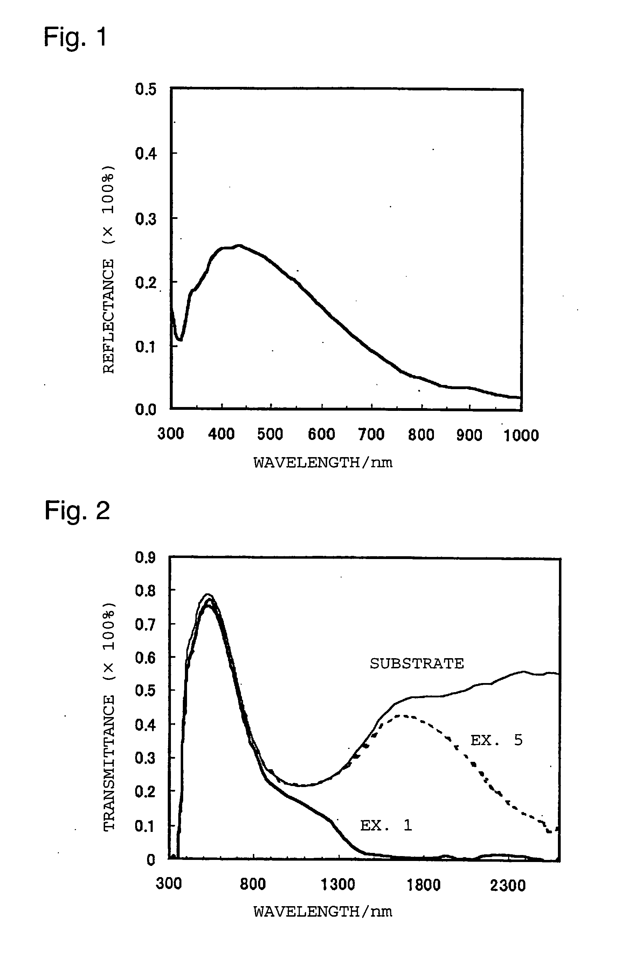

As transparent electroconductive oxide fine particles, ITO fine particles (average primary particle diameter: 30 nm, Sn/In=5%) were used, and the diffuse reflection spectrum (Fig. 1) of the ITO fine particles had a maximum reflectance at 440 nm.

For the preparation of the dispersion of the ITO fine particles, 120 g of the ITO fine particles were added to 280 g of deionized water having the pH adjusted to 3 by nitric acid, followed by dispersion treatment by means of a wet system jet mill, whereupon pure water was added to obtain a dispersion A having the ITO fine particles dispersed to have a solid content concentration of 20 wt%. The number average agglomerated particle diameter of the ITO fine particles in the dispersion was 100 nm.

### EXAMPLE 1

5.7 g of tetramethoxysilane and 6.2 g of methyltrimethoxysilane were mixed to 23.7 g of ethanol, and while stirring the solution at 40°C, 6 g of a 0.1 mol/liter nitric acid aqueous solution was gradually dropwise added. Stirring was continued for 1 hour in a warm bath at 40°C to obtain a liquid B.

Into 50 g of the dispersion A, 25 g of the liquid B was slowly dropwise added with stirring, followed by stirring for 30 minutes at room temperature, to obtain a composition C for forming the first film layer. The obtained composition C was coated by a spin coating method on a highly heat absorptive green glass (Tᵥ:75%, Te:47%, T1=22%, T2=49%, UVFL manufactured by Asahi Glass Company, Ltd.) having a thickness of 3.5 mm and dried at 120°C for 10 minutes in atmospheric air to form a lower film layer.

A 5 wt% polysilazane dibutyl ether solution was coated by a spin coating method on the lower film layer, dried at 120°C for 10 minutes in atmospheric air, and then heat-treated in an electric furnace in an atmosphere of atmospheric air maintained at 720°C until the glass substrate temperature became 685°C, to obtain an infrared shielding film-coated glass. The time for the heat treatment was about 4 minutes. The thickness of the obtained film was such that the first film layer was 0.5 µm, and the second film layer was 0.1 µm.

When the abundance ratio of "transparent electroconductive oxide fine particles"/"silicon oxide" in the first film layer was measured by the X-ray photoelectron spectroscopy and represented by a mass ratio, "transparent electroconductive oxide fine particles"/"silicon oxide"=10/4. Further, ITO do not undergo crystal growth at 685°C, and the ITO average primary particle diameter in the first film layer is 30 nm. Further, the composition analysis of the second layer was carried out, whereby the main component was silicon oxide, but it was silicon oxynitride containing also silicon nitride slightly.

The results of evaluation of the properties (visible light transmittance, solar energy transmittance, abrasion resistance and radiowave attenuation) of the obtained infrared shielding film-coated glass, are shown in Table 1. Further, the spectral transmittance of the infrared shielding film-coated glass is shown in Fig. 2.

### EXAMPLE 2

3.8 g of tetramethoxysilane and 7.9 g of methyltrimethoxysilane were mixed to 23.9 g of ethanol, and while stirring the solution at 40°C, 6 g of a 0.1 mol/liter nitric acid aqueous solution was gradually dropwise added. Stirring was continued for 1 hour in a warm bath at 40°C to obtain a matrix component liquid (liquid D).

Into 50 g of the dispersion A, 42 g of the liquid D was slowly dropwise added with stirring, and stirred at room temperature for 30 minutes, to obtain a composition E for forming the first film layer. The obtained composition E was coated by a spin coating method on a highly heat absorptive green glass (Tᵥ:75%, Te:47%, T1=22%, T2=49%, UVFL, manufactured by Asahi Glass Company, Limited) having a thickness of 3.5 mm. Thereafter, in the same manner as in Example 1, the upper film layer was coated and then heat-treated to obtain an infrared shielding film-coated glass. The thickness of the obtained film was such that the first film layer was 0.65 µm, and the second film layer was 0.1 µm.

The abundance ratio of "transparent electroconductive oxide fine particles"/"silicon oxide" in the first film layer was measured by the X-ray photoelectron spectroscopy and represented by a mass ratio, whereby "the transparent electroconductive oxide fine particles"/"silicon oxide"=10/6. Further, ITO does not undergo crystal growth at 685°C, and the ITO average primary particle diameter in the first film layer is 30 nm.

The results of evaluation of the properties (visible light transmittance, solar energy transmittance, abrasion resistance and radiowave attenuation) of the obtained infrared shielding film-coated glass are shown in Table 1.

### EXAMPLE 3

An infrared shielding film-coated glass was obtained in the same manner as in Example 1 except that in the step of drying the lower film layer in Example 1, after the drying at 120°C for 10 minutes in atmospheric air, exposure was carried out for 5 minutes by a 200 W low pressure mercury lamp. The abundance ratio of "transparent electroconductive oxide fine particles"/"silicon oxide" in the first film layer was measured by the X-ray photoelectron spectroscopy and represented by a mass ratio, whereby "transparent electroconductive oxide fine particles"/"silicon oxide"=10/4. Further, ITO does not undergo crystal growth at 685°C, and the ITO average primary particle diameter in the first film layer is 30 nm.

### EXAMPLE 4

The composition C used in Example 1 was diluted ten times with 2-propanol to obtain a composition, which was coated by a spray coating method on a highly heat absorptive green glass of 60 cm x 80 cm x 3.5 mm and dried in atmospheric air by a tunnel type oven maintained at 150°C, whereby a 0.3 wt% polysilazane dibutyl ether solution was coated by a spray coating method and dried in atmospheric air by a tunnel type oven maintained at 150°C.

The glass having the lower film layer and the upper film layer coated and dried, was heated in atmospheric air by means of a large size tempering furnace until the glass substrate temperature became 685°C (about 4 minutes), followed by cooling in air to carry out tempering treatment. The abundance ratio of "transparent electroconductive oxide fine particles"/"silicon oxide" in the first film layer was measured by the X-ray photoelectron spectroscopy and represented by a mass ratio, whereby "transparent electroconductive oxide fine particles"/"silicon oxide"=10/4. Further, ITO does not undergo crystal growth at 685°C, and the ITO average primary particle diameter in the first film layer is 30 nm. The properties of the obtained infrared shielding film-coated tempered sheet glass are shown in Table 1.

### EXAMPLE 5: Comparative Example

In Example 1, without preparing the upper film layer, the lower film layer-coated glass substrate was heat-treated in the same manner as in Example 1 to obtain an infrared shielding film-coated glass. The results are shown in Table 1, and the spectral transmittance of the glass after heat treatment is shown in Fig. 1.

### EXAMPLE 6: Comparative Example

An infrared shielding film-coated glass was obtained in the same manner as in Example 1 except that in Example 1, the heat treatment was carried out under the condition of 180°C for 30 minutes. The results are shown in Table 1.

In Table 1, Examples 1 to 6 represent the above Examples, value m represents the value m represented by the average compositional formula (CH₃)ₘSi(OR)₄₋ₘ, and the film thickness represents the first film layer thickness and the second film layer thickness and is indicated in the order of "first film layer thickness"/"second film layer thickness" by a unit of µm. Tv-1 represents the visible light transmittance (%) of the glass substrate itself, Tv-2 represents the visible light transmittance (%) of the infrared shielding film-coated glass, and Tv-3 represents the visible light transmittance (%) of the infrared shielding film obtained by calculation. For the abrasion resistance, a 1000 rotation abrasion test was carried out by a CS-10F abrasion wheel by means of a Taber type abrasion resistance tester in accordance with the method disclosed in JIS R3212 (1998), and the degree of scratches before and after the test was measured by the haze (haze value), and the increase in haze was shown. With respect to the abrasion resistance of Note 1, the tempered glass could not be cut, and it was impossible to carry out the abrasion resistance test, but the abrasion resistance was at the same level as in Example 1.

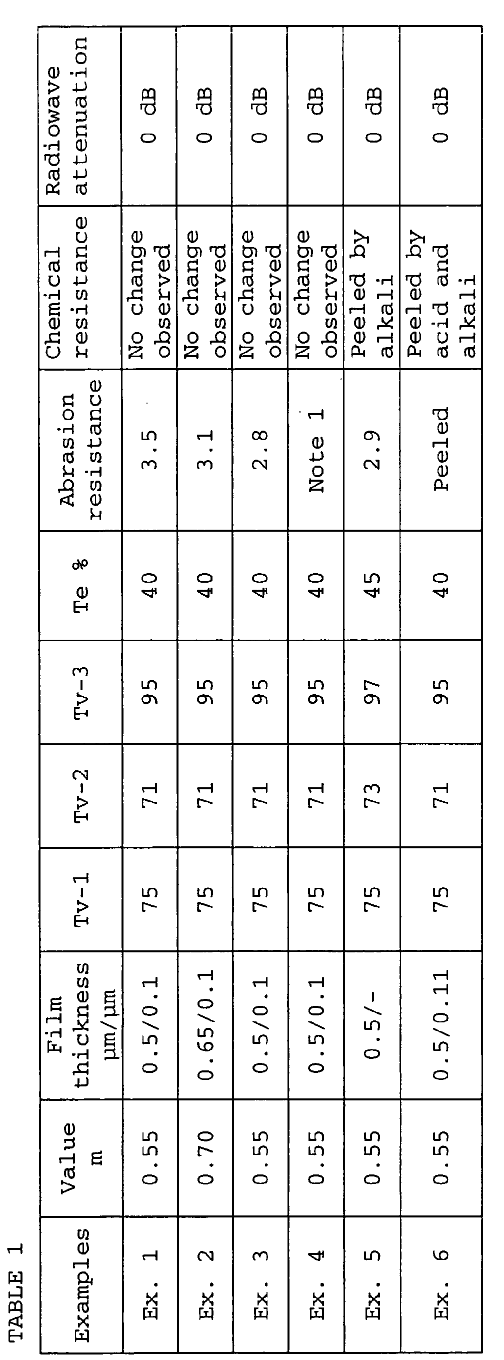

### EXAMPLE 7: Comparative Example

ITO fine particles, of which the powder color in the xy chromaticity coordinates with illuminant C in a visual field of 2° was (x, y)=(0.347, 0.376), and the crystallite size obtained by the powder X-ray diffraction method was 26 nm, were dispersed in a nitric acid aqueous solution of pH 3 by means of a sand mill to an ITO concentration of 20% to obtain a dispersion F. The average dispersed particle diameter was 90 nm.

0.36 g of tetramethoxysilane and 2.86 g of methyltrimethoxysilane were mixed to 26.6 g of ethanol, and while stirring the solution at 40°C, 1.68 g of a 0.1 mol/liter nitric acid aqueous solution was gradually dropwise added. Stirring was continued for 1 hour in a warm bath at 40°C to obtain a matrix component liquid (liquid G) .

Into 70 g of the dispersion F, 37.3 g of the liquid G was slowly dropwise added with stirring, and stirring was continued for 30 minutes at room temperature to obtain a composition H for forming the first film layer. The obtained composition H was coated by a spin coating method on a highly heat absorptive green glass (Tᵥ:75%, Te:47%, T1=22%, T2=49%, UVFL manufactured by Asahi Glass Company, Limited) having a thickness of 3.5 mm and dried at 120°C for 10 minutes in atmospheric air to form a lower film layer.

A 5 wt% polysilazane dibutyl ether solution was coated by a spin coating method on the lower film layer and dried at 120°C for 10 minutes in atmospheric air to obtain a film-coated glass. The results of evaluation of the properties (visible light transmittance, solar energy transmittance, abrasion resistance and radiowave attenuation) of the obtained film-coated glass are shown in Table 2.

### EXAMPLE 8

The film-coated glass obtained in Example 7, was heat-treated in an electric furnace in an atmosphere of atmospheric air maintained at 720°C until the glass substrate became 685°C, to obtain an infrared shielding film-coated glass. The time for the heat treatment was about 4 minutes. The thickness of the obtained film was such that the first film layer was 0.3 µm, and the second film layer was 0.1 µm.

The results of evaluation of the properties of the obtained infrared shielding film-coated glass are shown in Table 2.

### EXAMPLE 9

The ITO fine particles used in Example 7 were dispersed in ethanol containing 0.02 mass% of concentrated nitric acid by means of a beads mill to obtain a dispersion I containing 7 mass% of ITO. The average dispersed particle diameter was 90 nm. The obtained dispersion I was coated by a spin coating method on a highly heat absorptive green glass (Tᵥ:75%, Te:47%, T1=22%, T2=49%, UVFL manufactured by Asahi Glass Company, Limited) having a thickness of 3.5 mm, and dried by rotating for 1 minute at room temperature. Then, a 5 wt% polysilazane xylene solution was coated by a spin coating method on the lower film layer and dried at 120°C for 10 minutes in atmospheric air to obtain a film-coated glass. The obtained film-coated glass was heat-treated in an electric furnace in an atmosphere of atmospheric air maintained at 720°C until the glass substrate temperature became 685°C, to obtain an infrared shielding film-coated glass. The time for the heat treatment was about 4 minutes. The thickness of the obtained film was such that the first film layer was 0.3 µm, and the second film layer was 0.1 µm.

In the first film layer composition, no siloxane matrix was contained, but when the composition of the obtained film was analyzed, "transparent electroconductive oxide fine particles"/"silicon oxide" in the first film layer=10/3. It is considered that this indicates that during the coating of the second film layer, the polysilazane as a component for forming the second film layer penetrated into the first film layer.

The results of evaluation of the properties of the obtained infrared shielding film-coated glass are shown in Table 2.

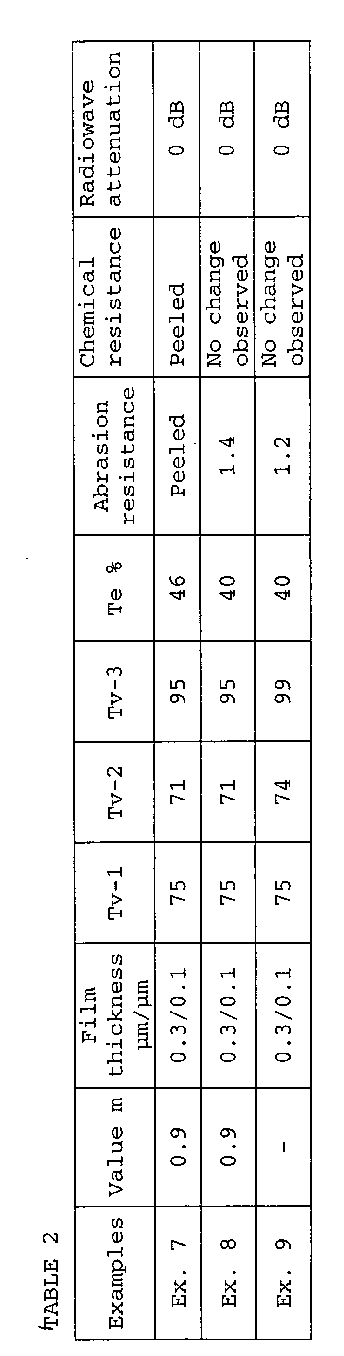

Te of the glass substrate itself is 47%. Accordingly, as is evident from the above results, the infrared shielding film-coated glasses obtained in Examples 2 to 4 exhibited a high infrared shielding property with Te being 40% by a reduction of Te by 7%, even after the severe heat treatment corresponding to tempering treatment. In an application to a front side glass for automobile, practically, Te is desired to be at most 42%, preferably at most 40%. Further, the infrared shielding film-coated glasses obtained in Example 2 to 4 are provided also with high durability. Further, no change was observed in the chemical resistance test. On the other hand, in Example 5, a second film layer was not formed, whereby oxidation of ITO in the first film layer took place during the heat treatment, whereby Te was large at 45%, and no adequate infrared shielding property was obtained. Further, in Example 6, curing was carried out at a low temperature, and no oxidation of ITO took place, and an infrared shielding property was obtained, but curing of the silicon oxide matrix material was inadequate, and the mechanical durability was inadequate. Thus, in Examples 5 and 6, the purpose of the present invention could not be accomplished.

Further, Example 7 represents a non-fired film, and ITO fine particles having no infrared shielding property were used. Accordingly, it had no infrared shielding property, and the abrasion resistance was also very weak. However, as shown in Example 8, by the firing, the infrared shielding property was obtained, and a film provided also with high abrasion resistance and chemical resistance, was obtained.

Further, in Example 9, no siloxane matrix was contained in the first film layer composition, but silicon oxide was contained in the first layer of the film formed by double layer lamination. It is considered that this indicates that the polysilazane in the second film layer composition penetrated into the first layer. The infrared shielding film thus prepared has very high durability and high visible light transmittance, and thus is suitable for application to automobiles, etc.

The infrared shielding film-coated glass of the present invention has high visible light transmittance, high radiowave transmittance and is excellent in mechanical durability. Further, the process of the present invention is expected to be used particularly for applications to glass for automobiles, glass for buildings, etc.

The entire disclosures of Japanese Patent Application No. 2003-355104 filed on October 15, 2003 and Japanese Patent Application No. 2003-411248 filed on December 10, 2003 including specifications, claims, drawings and summaries are incorporated herein by reference in their entireties.

## Claims

1. An infrared shielding film-coated glass comprising a glass substrate and an infrared shielding film formed thereon, wherein the infrared shielding film comprises a first film layer formed in a thickness of from 0.2 to 2 µm on the surface of the glass substrate and having transparent electroconductive oxide fine particles having an average primary particle diameter of at most 100 nm dispersed in a silicon oxide matrix in a mass ratio of transparent electroconductive oxide fine particles/silicon oxide = 10/0.5 to 10/20, and a second film layer laminated in a thickness of from 0.02 to 0.2 µm on the first film layer and comprising silicon oxide, silicon oxynitride or silicon nitride, and the increase in haze by abrasion after a 1000 rotation test by a CS-10F abrasive wheel in accordance with the abrasion resistance test stipulated in JIS R3212 (1998) is at most 5%.

2. The infrared shielding film-coated glass according to Claim 1, wherein the infrared shielding film has a visible light transmittance of at least 90%.

3. The infrared shielding film-coated glass according to Claim 1 or 2, wherein the transparent electroconductive oxide fine particles are fine particles which show a peak wavelength in reflectance of at most 550 nm in a diffuse reflection spectrophotometry of the fine particles.

4. The infrared shielding film-coated glass according to any one of Claims 1 to 3, wherein the glass substrate is a glass substrate having a visible light transmittance of at least 70% as prescribed in JIS R3106 (1998), a transmittance at a wavelength of 1.0 µm of at most 30%, and a transmittance at a wavelength of 2.0 µm of from 40 to 70%.

5. A process for producing the infrared shielding film-coated glass as defined in Claim 1, which comprises:
a step of coating a composition comprising transparent electroconductive oxide fine particles having an average primary particle diameter of at most 100 nm, on the surface of a glass substrate to form a lower film layer having the transparent electroconductive oxide fine particles deposited,
a step of semi-curing the lower film layer at a temperature of at most 200°C,
a step of coating a composition comprising a polysilazane compound on the lower film layer to form an upper film layer thereby to form a laminated film, and
a step of heat-treating the obtained laminated film-coated glass substrate in an atmosphere containing oxygen at a glass substrate temperature of from 400°C to 750°C.

6. The process for producing the infrared shielding film-coated glass according to Claim 5, wherein the composition comprising the transparent electroconductive oxide fine particles, contains a component which becomes a silicon oxide matrix having a siloxane bond, when heated.

7. The process for producing the infrared shielding film-coated glass according to Claim 5 or 6, wherein as the component which becomes the silicon oxide matrix, at least one member selected from the group consisting of a mixture of alkoxysilanes represented by the average compositional formula (CH₃)ₘSi(OR)₄₋ₘ (R is a methyl group or an ethyl group, and m is from 0.2 to 0.95), a hydrolysate of the mixture and a polycondensate of the mixture, is used.

8. The process for producing the infrared shielding film-coated glass according to any one of Claims 5 to 7, wherein as the transparent electroconductive oxide fine particles, fine particles which show a peak wavelength in reflectance of at most 550 nm in a diffuse reflection spectrophotometry of the fine particles, are used.

9. The process for producing the infrared shielding film-coated glass according to any one of Claims 5 to 7, wherein as the transparent electroconductive oxide fine particles, ITO fine particles are used, of which the powder color in the xy chromaticity coordinates obtained by a 2-degree visual field with illuminant C in accordance with JIS Z8701 (1999), is such that value x is at least 0.3 and value y is at least 0.33.

10. The process for producing the infrared shielding film-coated glass according to Claim 9, wherein as the ITO fine particles, ITO fine particles are used, of which the crystallite size obtained by the powder X-ray diffraction analysis is at least 15 nm and at most 50 nm.

11. The process for producing the infrared shielding film-coated glass according to any one of Claims 5 to 9, wherein in the step of semi-curing the lower film layer, ultraviolet rays having a wavelength of at most 300 nm are irradiated for at least one minute to semi-cure the film layer.
